# EUROPEAN PATENT APPLICATION

(11) **EP 1 640 649 A1**
(43) Date of publication of application: **29.03.2006**
(21) Application number: 05255997.8
(22) Date of filing: 27.09.2005
(51) Int. Cl.: F16K 31/122, F16K 41/10

(54) **Diaphragm valve**

(30) Priority: 28.09.2004 US 613692 P; 14.06.2005 US 160214
(71) Applicant: NORDSON CORPORATION, Westlake, Ohio 44145-1119 (US)
(72) Inventor: Strong, Warren N., Hope, RI 02831 (US)
(74) Representative: Findlay, Alice Rosemary

(57) **Abstract**

A valve (10) is provided for use in a fluid dispensing system. The valve includes a valve body (12) having an interior cavity (20) and a valve stem (24) mounted for axial movement between open and closed positions within the valve body (12). The valve stem (24) includes an actuation air passageway (44) having an air inlet (45) and an air outlet (46), with the air inlet (45) being adapted to be coupled to a source of pressurized actuation air. The air outlet communicates with said interior cavity (20). The valve also includes a piston element (26) carried by the valve stem (24) and positioned within the interior cavity (20). The valve further includes a liquid inlet (70), a liquid outlet (72), and a valve seat (62) positioned between the liquid inlet (70) and the liquid outlet (72), whereby the valve stem (24) is movable from the closed position to the open position relative to the valve seat (62) when pressurized actuation air is introduced into the interior cavity (20) through the actuation air passageway (44) and acts against the piston element (26).

## Description

This invention relates to valves and, more particularly, to diaphragm valves.

Diaphragm valves, including pneumatically controlled diaphragm valves, are known in the art. Typically valves of this type use air pressure to raise a piston against the force of a spring to change the valve from a closed position to an open position to allow fluid to be dispensed from the valve. This air pressure is typically provided through a fitting connected to the side of the valve below the piston. While valves of this type have been advantageously utilized in the fluid dispensing industry, the side mounted air supply adds to the valve weight and to the overall size of the valve. This is because the outside diameter of the valve must be larger than would otherwise be necessary, to increase the wall thickness of the valve body as required to accommodate an internally threaded port to mate with a conventional externally threaded fluid coupling that is part of an air supply system.

This can be particularly problematic in applications where size and weight are important design considerations. For instance, with valves mounted to a robotic arm, that pivots about XYZ axes and dispenses fluid onto a work piece, limited space may be available for such valves when the complex movement of the robotic arm and valve are considered together with the need for other devices to access the work piece. Also, as can be appreciated by one of ordinary skill in the art, an increase in valve mass can inhibit the ability of the robot arm to rotate about multiple axes and move from one position to another within the time required in a production line environment. The increased valve mass also increases operational loads on the robot arm that can reduce the service life of the robot.

The present invention provides in one aspect a valve for use in a fluid dispensing system. The valve includes a body having an interior cavity and a valve stem mounted for axial movement between open and closed positions within the valve body. The valve stem includes an actuation air passageway having an air inlet and an air outlet, with the air inlet being adapted to be coupled to a source of pressurized actuation air. The air outlet communicates with the interior cavity. The valve further includes a piston element carried by the valve stem and positioned within the interior cavity. The valve also includes a liquid inlet, a liquid outlet, and a valve seat positioned between the liquid inlet and the liquid outlet, whereby the valve stem is movable from the closed position to the open position relative to the valve seat when pressurized actuation air is introduced into the interior cavity through the actuation air passageway and acts against the piston element.

Supplying pressurized fluid, such as a pressurized gas, through a passageway formed in the piston stem for the purposes of operating the valve, i.e. changing the valve position, allows the valve to be smaller and lighter than conventional valves having side mounted air fittings. This is because the outside diameter of conventional valves having side mounted air fittings must be larger than the outside diameter of the valve of the present invention, to increase the wall thickness of the valve body as required to accommodate an internally threaded port to mate with a conventional externally threaded fluid coupling that is part of an air supply system.

Additional weight reduction is achieved when the couplings that mate to conventional valves and to the valve of the present invention are considered. For instance, with conventional valves utilizing side mounted air supply, a 90° elbow is typically threaded into an internally threaded port on the side of the valve because such an elbow fitting can accommodate the main air supply line to be disposed generally parallel to the centerline of the valve. Such an elbow is heavier and bulkier than the conventional fluid coupling that can be used to mate with the passageway formed in the piston stem of the valve of the present invention. The reduction in weight and size of the valve of the present invention, as compared to conventional valves, results in various advantages. For example, when the valve of the present invention is mounted on a robot arm, the reduced valve weight enhances the ability of the robot arm to rotate about multiple axes and to move from one position to another within the time required in a production line environment. Furthermore, the reduced valve weight can increase the service life of the robot.

Also, when mounted on a robot arm, the reduced size of the valve enhances the ability of other devices to access a work piece, which receives a liquid dispensed from the valve of the present invention.

The invention will now be further described by way of example with reference to the accompanying drawings in which:

FIG. 1 is a perspective view of a valve according to one embodiment of the present invention;

FIG. 2A is a cross-sectional view of the valve shown in FIG. 1, with the valve being illustrated in a closed position;

FIG. 2B is a cross-sectional view similar to FIG. 2A, but with the valve being illustrated in an open position; and

FIG. 3 is a schematic illustration of a liquid dispensing system incorporating the valve shown in FIGS. 1, 2A and 2B.

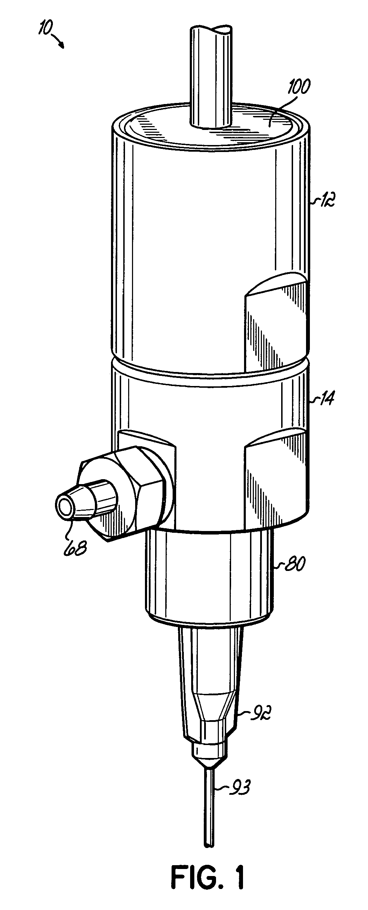

Referring now to the drawings, FIG. 1 is a perspective view illustrating a valve 10 according to one embodiment of the present invention. Valve 10 includes a body, indicated at 12, with body 12 including a first body portion 14 and a second body portion 16 which are threadably engaged with one another at 18. Body 12 includes an interior cavity 20, which is formed in the first body portion 14. Valve 10 further includes an axially extending valve stem 24 mounted for axial movement between open and closed positions, corresponding to open and closed positions of valve 10, within valve body 12. A piston element 26 is carried by valve stem 24 and is positioned within the interior cavity 20. In the illustrative embodiment, piston element 26 is a disk. In one embodiment, valve body 12, valve stem 24 and piston element 26 are made of type 303 stainless steel. However, other suitable materials can be utilized. For instance, alternate materials for valve body 12 include type 316 stainless steel and ultra high molecular weight (UHMW) plastics. With regard to valve stem 24 and piston element 26, alternate materials include type 316 stainless steel and aluminum.

Stem 24 includes a proximal end portion 28 which is configured to accept a conventional fluid coupling, such as coupling 30. Disk 26 includes a first axially facing surface 32 which faces in a direction away from the proximal end portion 28 of stem 24 and further includes a second axially facing surface 34, which faces in a direction toward the proximal end portion 28 of stem 24. Valve 10 further includes an O-ring 36 that is disposed in a groove 38 formed in a perimeter edge 40 of the disk 26. O-ring 36 is made of an elastomeric material, such as rubber. Accordingly, the disk 26 is disposed in sealing engagement with an interior surface 42 of the first body portion 14 that defines the interior cavity.

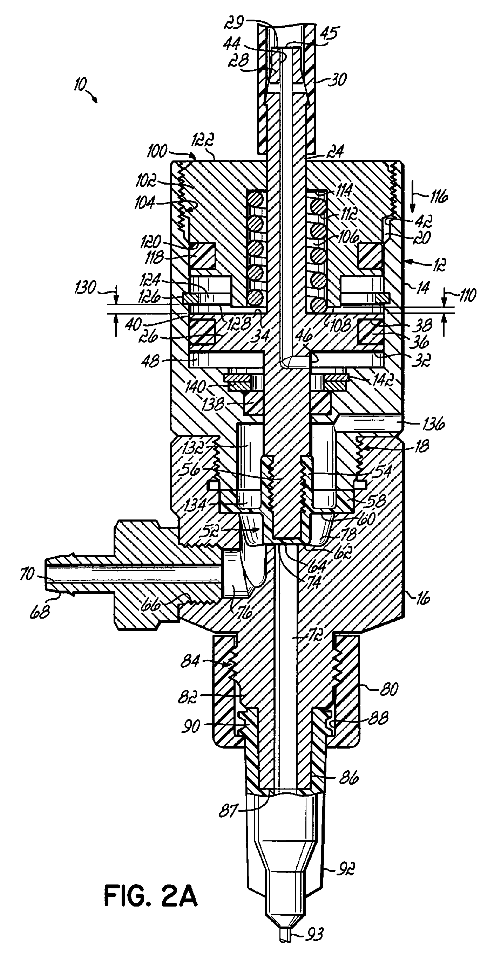

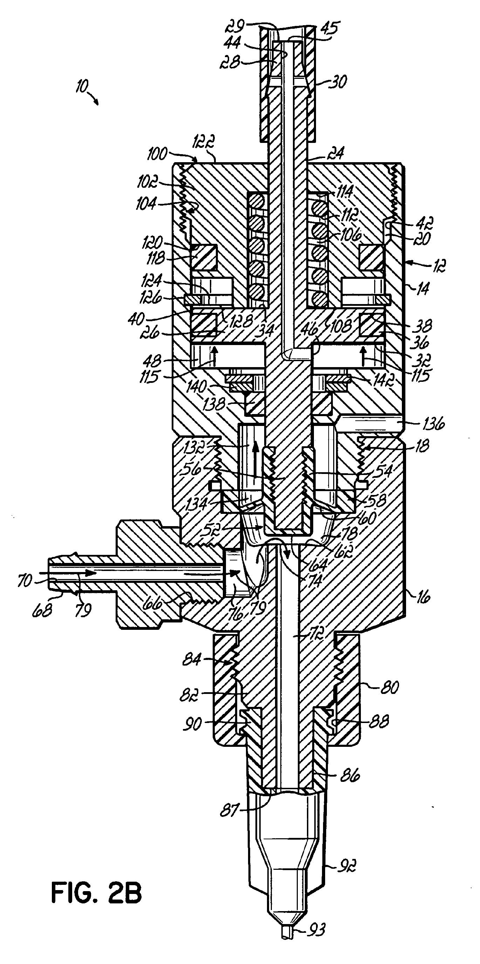

Stem 24 includes an actuation air passageway 44 that extends axially through a portion of stem 24 and axially through disk 26 as shown in FIGS. 2A and 2B. Passageway 44 includes a proximal end 45 that provides an actuation air inlet and a distal end 46 that provides an actuation air outlet. As conventionally used in the art, the terms "gas" and "air" are synonymous and cover any gaseous elements, including those that may contain vaporized or atomized liquids that may, for example, be present for lubrication purposes. Outlet 46 is in fluid communication with a portion 48 of the interior cavity 20 that is disposed proximate the first axially facing surface 32 of disk 26. Accordingly, passageway 44 is in fluid communication with portion 48 of cavity 20. Passageway 44 is operatively effective, as subsequently discussed in further detail, for receiving pressurized actuation air via a source of pressurized air and one or more fluid conduits terminating in a coupling such as coupling 30. Pressurized air within the portion 48 of cavity 20 exerts a force acting in a first axial direction indicated by arrow 115 against the first axially facing surface 32 of disk 26.

Valve 10 further includes a diaphragm 52 which is made from a wear-resistant polymer in the illustrative embodiment. Diaphragm 52 includes a centrally disposed, hollow cylindrical portion 54 that is threaded onto a distal end portion 56 of stem 24. Diaphragm 52 also includes an annular portion 58 that is disposed radially outwardly of the hollow cylindrical portion 54 and the distal end portion 56. The annular portion 58 of diaphragm 52 is secured within body 12. More particularly, in the illustrative embodiment, the annular portion 58 is captured between body portions 14 and 16 as shown in FIGS. 2A and 2B. Additionally, diaphragm 52 includes a flexible web 60 that interconnects the hollow cylindrical portion 54 and the annular portion 58 of diaphragm 52.

Valve 10 includes a seat 62 which is a substantially flat interior surface of the second body portion 16. Valve 10 further includes a sealing element or plug 64 connected to stem 24. Sealing element or plug 64 is a substantially flat circular end portion of the hollow cylindrical portion 54 of diaphragm 52. The advantages of the particular configuration of valve seat 62 and sealing element or valve plug 64 will be subsequently discussed.

Valve 10 further includes a threaded fluid inlet port 66 which is suitable for receiving a conventional threaded coupling, such as coupling 68 having an internal passageway 70. Valve 10 includes a second passageway 72 extending axially away from valve seat 62 through a portion of the second body portion 16. Passageway 72 includes an opening 74, at a proximal end thereof, that is surrounded by the valve seat 62. When the valve 10 is in an open position, as shown in FIG. 2B, passageway 72 is in fluid communication with the valve seat 64. However, when the valve 10 is in a closed position as shown in FIG. 2A, the valve stem 24 forces sealing element or plug 64 against seat 62 and closes the opening 74 of passageway 72. As will be subsequently discussed in greater detail, the passageway, or liquid outlet 72, is operatively effective for receiving a fluid, such as a pressurized liquid, when the valve is in an open position and then discharging the liquid from valve 10.

A third passageway, or liquid inlet, 76 is formed in the second body portion 16 of valve 10 and is in fluid communication with a reservoir 78 that is disposed around the valve seat 62. Reservoir 78 is in surrounding relationship with a portion of the hollow cylindrical portion 54 of diaphragm 52, and extends to one surface of the web 60 of diaphragm 52. Passageway 76 and reservoir 78 are operatively effective for receiving a fluid, such as a pressurized liquid from an external source through one or more conduits and then through the internal passageway of a fluid coupling such as passageway 70 of coupling 68. The particular bowl-shaped configuration of reservoir 78 advantageously reduces or eliminates turbulence and associated bubbles that may otherwise be present in a pressurized fluid received therein due to the fluid turning as it passes through passageway 76, into reservoir 78 and out passageway 72, as illustrated by flow arrows 79, when valve 10 is in the open position. Elimination of air bubbles in the liquid being dispensed can be very advantageous depending on the particular application. For instance, if the liquid being dispensed is a bonding process for a digital video disk (DVD), air bubbles are undesirable.

Passageway 76 is in fluid communication with reservoir 78, regardless of whether valve 10 is in an open position as shown in FIG. 2B or in a closed position as shown in FIG. 2A. However, passageway 76 and reservoir 78 are in fluid communication with passageway 72 when valve 10 is in an open position, but are not in fluid communication with passageway 72 when valve 10 is in a closed position.

Valve 10 includes a tip retaining nut 80 which is threaded onto a generally cylindrical portion 82 of the body portion 16 as indicated at 84. A tip luer 86 extends beyond the generally cylindrical portion 82 of body portion 16. Tip retaining nut 80 includes an annular recess 88 which is effective for receiving a hub 90 of a liquid dispensing tip 92. Accordingly, nut 80 prevents tip 92 from slipping off of luer 86. The dispensing tip 92 does not form a part of valve 10. The dispensing tip 92 can be a tip-small tip made by EFD, Inc., a wholly owned subsidiary of Nordson Corporation, with the particular size of the dispensing tip selected being a function of the viscosity of the liquid being dispensed. However, it should be understood that a wide variety of liquid dispensing tips can be used with the valve 10 of the present invention. The combination of valve 10 and the liquid dispensing tip 92 comprises a valve assembly.

The valve 10 further includes a stroke control cap 100 disposed within body 12. The stroke control cap 100 includes a first axial end portion 102 threadably engaged with the body portion 14 of body 12 as indicated at 104. The cap 100 further includes an internal cavity 106 and an axially facing surface 108 at a distal end thereof. The axially facing surface 108 of cap 100 is disposed in opposing relationship with the second axially facing surface 34 of disk 26. The axially facing surface 108 of cap 100 is spaced apart from the second axially facing surface 34 of disk 26 by a distance 110 when the valve 10 is in a closed position as shown in FIG. 2A. Distance 110 is equal to a stroke of the valve 10. Surface 108 of cap 100 is in contacting engagement with surface 34 of disk 26 when valve 10 is in an open position, i.e., full or completely open as shown in FIG. 2B.

A spring 112 is disposed within body 12 of valve 10. In the illustrative embodiment, the spring 112 is a coil spring and is disposed within the internal cavity 106 of cap 100. Spring 112 is disposed coaxially about stem 24 and extends axially between an internal land 114 defined by cap 100 and the second axially facing surface 34 of disk 26. Spring 112 is sized to continuously exert a biasing force against the second axially facing surface 34 of disk 26 with this force acting in a second axial direction as indicated by arrow 116 shown in FIG. 2A, that is opposite to the direction indicated by arrow 115 discussed previously. Accordingly, under non-operating conditions, i.e., when pressurized air is not supplied to portion 48 of cavity 20 via passageway 44, such that atmospheric pressure exists in portion 48 of cavity 20, the biasing force exerted by spring 112 against surface 34 of disk 26 forces the valve plug 64 against and in sealing engagement with valve seat 62, thereby closing the second passageway 72 and causing valve 10 to be in a closed position as shown in FIG. 2A. As subsequently discussed, when the pressure within cavity 48 exerts a force against surface 32 of disk 26 that is greater than the biasing force exerted by spring 112 on surface 34 of disk 26, the valve 10 is forced to an open position as shown in FIG. 2B.

An O-ring 118 is disposed in a groove 120 formed in the stroke control cap 100 and in contacting engagement with the inner surface 42 of the body portion 14 of valve 12. The stroke 110 of valve 10 can be changed by adjusting the position of the stroke control cap 100 within body portion 14. More particularly, the stroke control cap 100 may be threaded further into body portion 14 so as to reduce the magnitude of stroke 110 or, cap 100 may be turned in a direction that reduces the threaded engagement of cap 100 within body portion 14 so as to increase the magnitude of stroke 110. Threading cap 100 into or out of the body portion 14 is facilitated by a tamper proof keyway slot or slots (not shown) in a surface 122 of cap 100. The contacting engagement of the elastomeric O-ring 118 with the inner surface 42 of body portion 14 produces a frictional force that must be overcome to either thread cap 100 into or out of body portion 14. Accordingly, O-ring 118 is effective for preventing inadvertent changes in the stroke 110 of valve 10 that might otherwise occur, for instance in a vibration environment.

A snap ring 124 is disposed in a groove 126 formed in the inner surface 42 of body portion 14 and extends radially inwardly from surface 42. The snap ring 124 includes an axially facing annular surface 128 that is spaced apart from the second axially facing surface 34 of disk 26 by a second distance 130. The second distance 130 is greater than the stroke 110 of valve 10 for ranges of stroke 110 that are expected during normal operation, i.e., distance 130 is greater than the maximum expected value of stroke 110. Accordingly, the snap ring 124 will not contact the second axially facing surface 34 of disk 26 during normal operation. The snap ring 124 provides a redundant backup feature for retaining stem 24 and piston element or disk 26 within body 12 of valve 10.

A second cavity 132 is formed in body portion 14. The second cavity 132 is an annular cavity and includes a first axial end 134 disposed proximate the web 60 of diaphragm 52. A fourth, or vent, passageway 136 is formed in body 12 of valve 10. In the illustrative embodiment, passageway 136 is formed in body portion 14 and is in fluid communication with the second cavity 132. The combination of cavity 132 and passageway 136 fulfill the following two functions. In the first instance, cavity 132 and passageway 136 prevent the web 60 of diaphragm 52 from being backpressured by any pressurized air existing in cavity 132 adjacent web 60, by allowing such fluid to escape through passageway 136 exterior of the valve 10. If the web 60 would be backpressured, the ability of web 60 to flex may be compromised, which would be undesirable as may be appreciated by the subsequent discussion of the operation of valve 10. Also, if web 60 ruptures during operation, any pressurized liquid entering valve 10 through passageway 76, would flow out of the valve 10 through cavity 132 and passageway 136, thereby giving notice of a problem to an operator of any system incorporating valve 10.

O-ring 138 is disposed within body portion 14 in surrounding relationship with stem 24 at an axial location intermediate the portion 48 of interior cavity 20 and the annular cavity 132 to prevent any pressurized air from escaping from portion 48 of cavity 20. The O-ring 138 is retained in position by a washer 140 and a snap ring 142.

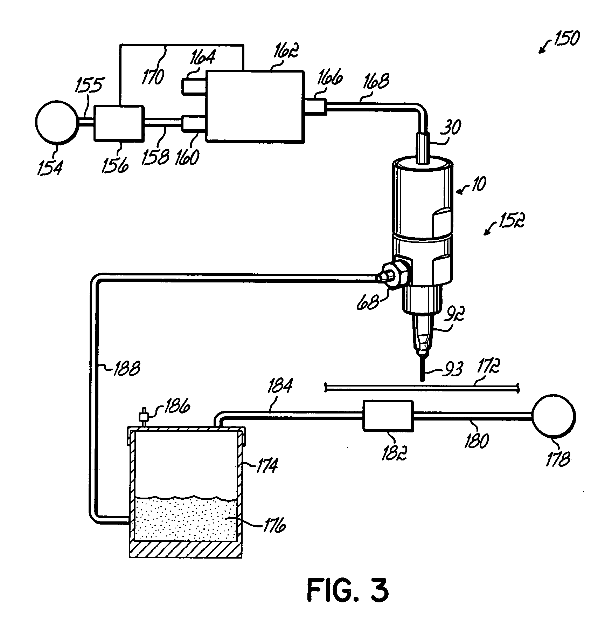

The operation of valve 10 can be further understood with reference to FIGS. 2A, 2B and FIG. 3 which is a simplified schematic illustration of a liquid dispensing system 150 that incorporates a valve assembly 152. The valve assembly 152 includes valve 10 and a liquid dispensing tip 92 secured to valve 10. Liquid dispensing system 150 includes a source 154 of pressurized air. The pressurized air exits source 154 through tubing 155 to a controller indicated schematically at 156, and then passes through another tubing 158 fluidly coupling the controller 156 and a first, pressure inlet port 160 of a 3-port, 2-way electrically operated solenoid valve 162. Valve 162 also includes a second, vent port 164 and a third port 166. When the valve 162 is deenergized, the vent port 164 is fluidly coupled to port 166 so pressurized air within portion 48 of cavity 20 of valve 10 can exhaust to atmosphere as subsequently discussed. When the valve 162 is energized, ports 160 and 166 of valve 162 are fluidly coupled, so pressurized air can discharge from valve 162 through port 166 and then flow through a conduit 168 to the coupling 30 connected to valve 10.

The controller 156 can be a ValveMate™ 7000, made by Nordson Corporation or can be a variety of other controllers. Controller 156 includes a variety of control buttons, one or more digital indicators, a pressure regulator and internal logic that permits various parameters, such as open time of valve 162 and therefore open time of valve 10, to be programmed. The foregoing components of controller 156 have not been shown or described as they are readily understood by one of ordinary skill in the art. Controller 156 and valve 162 are electrically coupled via cable 170. The open time of valve 10 is the primary control of a liquid deposit size onto a workpiece indicated schematically at 172 after a liquid discharges from valve 10 and dispensing tip 92.

The liquid dispensing system 150 further includes a reservoir 174 holding a liquid 176. Liquid 176 can be a wide variety of liquids. In one application, where workpiece 172 is a DVD, liquid 176 can be a UV-cure resin or similar fluid used in a bonding process. In another application, where workpiece 172 is a compact disk (CD) the liquid 176 can be a UV-cure resin or similar fluid used in a coating process.

System 150 further includes a source of pressurized gas 178 that supplies gas through tubing 180, a pressure regulator 182 and tubing 184 to the reservoir 174, so the gas pressurizes liquid 176 within reservoir 174. Reservoir 174 includes a pressure relief valve 186 to prevent reservoir 174 from being over pressurized.

The pressurized liquid 176 discharges from reservoir 174 through tubing 188 that is in fluid communication with the fluid coupling 68 connected to valve 10. The pressurized liquid then flows through passageways 70 and 76 to reservoir 78 via an opening in reservoir 78. When valve 10 is in a closed position, as shown in FIG. 2A, reservoir 78 is not in fluid communication with passageway 72, and the pressurized liquid 176 is dead-headed in reservoir 78.

Also, when the valve is in the closed position shown in FIG. 2A, any pressurized gas (i.e., pressurized over atmospheric pressure) within portion 48 of interior cavity 20 is vented out through passageway 44, coupling 30, tubing 168, port 166 of valve 162 and to atmosphere through port 164 of valve 162. Accordingly, the biasing force exerted by spring 112 against the axially facing surface 34 of disk 26, that acts in the second axial direction indicated by arrow 116, forces the plug 64 of valve 10 against seat 62 so passageway 72 is closed, preventing fluid 176 from discharging from valve 10.

When the solenoid valve 162 is energized, pressurized air flows through tubing 168 to coupling 30 and into passageway 44 of valve 10. The air flows through passageway 44, including leg portion 46, into the portion 48 of interior cavity 20, with portion 48 being disposed proximate the axially facing surface 32 of disk 26 of piston 22. The pressurized air exerts a force against surface 32 acting in the first axial direction as indicated by arrows 115. In one embodiment, when the air has a pressure of at least seventy psig, the force acting on surface 32 is greater than the biasing force exerted by spring 112 on surface 34. Accordingly, stem 24 and disk 26 move axially relative to body 12 in direction 115 so valve 10 is in an open position as shown in FIG. 2B. However, it may be appreciated that the air pressure required to move stem 24 and disk 26 in direction 115 relative to body 12 can vary in other embodiments depending on the parameters associated with spring 112, the size of disk 26, etc.

The web 60 of diaphragm 52 flexes as shown in FIG. 2B, allowing the hollow cylindrical portion 54 of diaphragm 52, and accordingly sealing element or valve plug 64, to move with stem 24 and disk 26 in direction 115. This causes plug 64 of valve 10 to be displaced from seat 62, which in turn causes reservoir 78 and passageways 70 and 76 to be in fluid communication with passageway 72. Consequently, pressurized liquid 176 flows through passageway 72 where it discharges from valve 10 into dispensing tip 92. Passageway 72 is in fluid communication with a hollow dispensing needle 93 of tip 92. Accordingly, the pressurized liquid 176 is then discharged from hollow dispensing needle 93 of tip 92 onto workpiece 172.

Valve 10 can be mounted on a robot arm (not shown) of a robot (not shown) with other components of system 150, such as controller 156, valve 162 and tubing 158 and 168, being mounted on the parts of the robot. Still other components of system 150, such as reservoir 174, for instance, can be mounted on a floor or other surface adjacent the robot. Flexible hoses can be used, for at least some of the conduits of system 150, as required to accommodate valve 10 being mounted on a movable robot arm.

The substantially flat design of valve seat 62 and sealing element or plug 64 enables valve 10 to provide full flow at about one half the stroke of current conventional liquid dispensing valves such as the 750 series valve made by EFD, Inc. which is a wholly owned subsidiary of the assignee of the present invention. This is because the 750 series utilizes a tapered valve plug/valve seat configuration in contrast to the substantially flat design of valve seat 62 and sealing element or plug 64 of valve 10. Accordingly, full flow of the fluid to be dispensed, can be achieved quicker in valve 10.

In one embodiment, valve 10 is a miniature diaphragm valve with a relatively small stroke 110. For instance, the stroke 110 may be about 0.025 inches. In this embodiment, valve 10 also has a relatively small overall size, or envelope. For instance, in this embodiment, the maximum width of valve 10, which corresponds to the outside diameter of body portions 12 and 14, is about 0.75 inches (19.05 mm). In this embodiment, the overall length of valve 10, as measured between an end surface 29 of the proximal end portion 28 of stem 24 and a distal end surface 87 of luer 86, is about 2.5 inches (63.61 mm). In this embodiment, valve 10 weighs about 1.62 ounces (45.9g). This compares to the following dimensions and weight of a 750 series conventional diaphragm valve, having control gas provided through the side wall of the valve: maximum width of about 1.06 includes (26.97mm); overall length of about 3.18 inches (80.91 mm); and weight of about 6.4 ounces (181.3g). Valve 10 of the present invention achieves the foregoing size and weight reduction relative to the conventional 750 series valve while providing substantially the same performance characteristics as the 750 series valve. For example, valve 10 provides substantially the same flow characteristics, including max flow, and achieves substantially the same consistency, from one liquid deposit to another, and provides bubble free liquid dispensing. Furthermore, positive valve shutoff is maintained as well as the ability to adjust fluid flow, and there is essentially no change in the service life of the included diaphragm 52 relative to the diaphragm used in the 750 series valve.

The significant reduction in weight and size of valve 10 as compared to the foregoing conventional valve, results in various advantages. When valve 10 is mounted on a robot arm, the reduced valve weight enhances the ability of the robot arm to rotate about multiple axes and to move from one position to another within the time required in a production environment. Furthermore the reduced weight of valve 10 can increase the service life of a robot using valve 10.

Also, when mounted on a robot arm, valve 10 enhances the ability of other devices to access the work piece, which receives liquid, such as pressurized liquid 176, from valve 10.
While the foregoing description has set forth preferred embodiments of the present invention in particular detail, it must be understood that numerous modifications, substitutions and changes can be undertaken.

## Claims

1. A valve for use in a fluid dispensing system, comprising a valve body having an interior cavity, a valve stem mounted for axial movement between open and closed positions within said valve body, said valve stem including an actuation air passageway having an air inlet and an air outlet, said air inlet adapted to be coupled to a source of pressurized actuation air and said air outlet communicating with said interior cavity, a piston element carried by said valve stem and positioned within said interior cavity, a liquid inlet, a liquid outlet, and a valve seat positioned between said liquid inlet and said liquid outlet, whereby said valve stem is movable from said closed position to said open position relative to said valve seat when pressurized actuation air is introduced into said interior cavity through said actuation air passageway and acts against said piston element.

2. A valve as claimed in claim 1, further comprising a substantially flat sealing element secured to said valve stem and axially moveable therewith, and said valve seat being substantially flat, said substantially flat sealing element being spaced apart from said substantially flat valve seat when said stem is in said open position, said substantially flat sealing element being disposed in contacting and sealing engagement with said substantially flat valve seat when said valve stem is in said closed position, whereby said liquid outlet is closed.

3. A valve for use in a fluid dispensing system, comprising a valve body having an interior cavity, a valve stem mounted for axial movement between open and closed positions within said valve body, an actuation air passageway having an actuation air inlet and an actuation air outlet, said air inlet adapted to be coupled to a source of pressurized actuation air and said air outlet communicating with said interior cavity, a piston element carried by said valve stem and positioned within said interior cavity, a substantially flat sealing element secured to said valve stem and axially moveable therewith, a liquid inlet, a liquid outlet, and a substantially flat valve seat positioned between said liquid inlet and said liquid outlet, whereby said valve stem and said sealing element are moveable from said closed position to said open position relative to said valve seat when pressurized actuation air is introduced into said interior cavity through said actuation air passageway and acts against said piston element.

4. A valve as recited in either claim 2 or claim 3, further comprising a diaphragm having a centrally disposed hollow cylindrical portion secured to said stem for axial movement therewith, said sealing element being a substantially flat circular end portion of said hollow cylindrical portion of said diaphragm.

5. A valve as recited in claim 4, wherein said diaphragm further includes an annular portion disposed radially outwardly of said hollow cylindrical portion and a flexible web, said flexible web interconnecting said annular portion and said hollow cylindrical portion.

6. A valve as claimed in any preceding claim, wherein said actuation air passageway extends axially through a portion of said valve stem and extends axially through said piston element.

7. A valve as claimed in any preceding claim, further comprising a stroke control cap disposed within said body, said stroke control cap being engaged with said body, said cap including an internal cavity and an axially facing surface, said axially facing surface being disposed at a distal end of said cap, said axially facing surface of said cap being disposed in opposing relationship with said piston element, said axially facing surface of said cap being spaced apart from said piston element by a distance when said valve stem is in said closed position, said distance being equal to a stroke of said valve.

8. A valve as claimed in claim 7, wherein said body includes an inner surface defining said interior cavity, said valve further comprising a snap ring disposed in a groove formed in said inner surface of said body, said snap ring extending radially inwardly from said inner surface, said snap ring having an axially facing annular surface spaced apart from said piston element by a second distance, said second distance being greater than said stroke of said valve.

9. A valve as claimed in either claim 7 or claim 8, further comprising an O-ring disposed in a groove formed in said stroke control cap, said O-ring being in contacting engagement with said body, said O-ring being operably effective for preventing inadvertent changes in said stroke.

10. A valve as claimed in any preceding claim, further comprising a second cavity formed in said body, said second cavity being an annular cavity, and a vent passageway formed in said body and extending through an exterior surface of said body, said vent passageway being in fluid communication with said second cavity.

11. A valve assembly for use in a fluid dispensing system, comprising a valve as claimed in any preceding claim and a liquid dispensing tip connected to said valve, said tip including a hollow dispensing needle.

12. A valve assembly as claimed in claim 11, further comprising a tip retaining nut secured to said body, wherein said tip retaining nut includes an annular recess and said liquid dispensing tips includes a hub, said hub being disposed in said recess whereby said liquid dispensing tip is retained by said nut, and wherein the hollow needle is in fluid communication with said liquid outlet of said valve.
